(19) Europäisches Patentamt / European Patent Office / Office européen des brevets

(11) **EP 2 239 901 B1**

(12) **EUROPÄISCHE PATENTSCHRIFT**

(45) Veröffentlichungstag und Bekanntmachung des Hinweises auf die Patenterteilung:
**18.06.2014   Patentblatt 2014/25**

(51) Int Cl.:
***H04L 27/00*** *(2006.01)*      ***H04L 25/02*** *(2006.01)*

(21) Anmeldenummer: **10159508.0**

(22) Anmeldetag: **09.04.2010**

(54) **Verfahren zur Schätzung und Kompensation von nichtlinearem, multiplikativem Phasenrauschen**

Method for estimating and compensating for non-linear multiplicational phase noise

Procédé d'estimation et de compensation de bruits de phase non linéaires et multiplicatifs

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **09.04.2009   EP 09157691**

(43) Veröffentlichungstag der Anmeldung:
**13.10.2010   Patentblatt 2010/41**

(73) Patentinhaber: **Technische Universität Dresden 01069 Dresden (DE)**

(72) Erfinder:
 • **Bittner, Steffen**
   **01773, Altenberg (DE)**
 • **Frotzscher, Andreas**
   **01824, Kurort Rathen (DE)**

(74) Vertreter: **Lippert, Stachow & Partner Patentanwälte Krenkelstrasse 3 01309 Dresden (DE)**

(56) Entgegenhaltungen:
 • PETROVIC D ET AL: "Common phase error due to phase noise in OFDM - estimation and suppression", 15TH IEEE INTERNATIONAL SYMPOSIUM ON PERSONAL, INDOOR AND MOBILE RADIO COMMUNICATIONS - PIMRC 2004, Bd. 3, 5. September 2004 (2004-09-05), - 8. September 2004 (2004-09-08), Seiten 1901-1905, XP010754270, NJ, USA DOI: 10.1109/PIMRC. 2004.1368329 ISBN: 978-0-7803-8523-8
 • TAEHYUK KANG ET AL: "Iterative Decoding, Offset and Channel Estimation for OFDM using the Unscented Kalman Filter", CONFERENCE RECORD OF THE FORTY-FIRST ASILOMAR CONFERENCE ON SIGNALS, SYSTEMS & COMPUTERS, 4. November 2007 (2007-11-04), - 7. November 2007 (2007-11-07), Seiten 1728-1732, XP031242375, ISBN: 978-1-4244-2109-1

**Beschreibung**

Die Erfindung betrifft ein Verfahren zur Schätzung und Kompensation von nichtlinearem, multiplikativem Phasenrauschen, bei welchem ein Phasenrauschtrajektor $\hat{\phi}$, welcher eine Schätzung einer Realisierung $\phi$ eines Phasenrauschprozesses abbildet, geschätzt wird, mittels dessen eine Kompensation des Phasenrauschens erfolgt.

Unter Phasenrauschen ist eine zufällige Veränderung der Phasenlage eines Empfangssignals zu verstehen, wobei diese Störung zum Beispiel durch nicht perfekte Oszillatoren, Schwankungen des Abtastzeitpunktes während der Analog-Digital-Wandlung oder aber auch durch Vibrationen eines Empfängers oder einer Empfängerschaltung verursacht werden kann.

Das Phasenrauschen hat einen Einfluss auf die Lage eines Empfangssymbols, welches beispielsweise in einem Konstellationsdiagramm dargestellt werden kann.

Besonders in Systemen mit mächtigen Modulationsalphabeten und damit einhergehend engen Entscheidungsregionen zeichnet sich das Phasenrauschen besonders stark ab, denn gerade solche Systeme sind sehr sensibel gegenüber Phasenstörungen.

Somit ergibt sich die Notwendigkeit einer Kompensation des Phasenrauschens.

Die durch Phasenrauschen verursachte stochastische Phasenfluktuation führt zu zwei wesentlichen Effekten, dem Gleichphasenfehler (engl. "common phase error" bzw. CPE) und der Unterträgerinterferenz (ICI...intercarrier interference). Speziell für einen gegebenen Fall von Phasenrauschen am Empfänger lässt sich der Empfangsvektor $\mathbf{Y}$ im Frequenzbereich schreiben als

$$\mathbf{Y} = \mathbf{HS}\underbrace{E_0}_{\text{CPE}} + \underbrace{(\mathbf{\Upsilon} - E_0\mathbf{I}_{N_{Rx}N})\mathbf{HS}}_{\text{ICI}} + \mathbf{\Psi} = \mathbf{HS}E_0 + \mathbf{\Gamma} + \mathbf{\Psi} = \mathbf{HS}E_0 + \mathbf{\Xi}.$$

$$1$$

Während die ICI aufgrund der Struktur von $\Upsilon$ für jeden Unterträger unterschiedlich ist, entspricht der CPE einer konstanten Rotation aller Unterträger, unabhängig von deren Lage im Spektrum. Diese Rotation ist jedoch unterschiedlich von OFDM-Symbol zu OFDM-Symbol und unterstreicht somit die Notwendigkeit einer Kompensation.

Erfolgt keine Kompensation, so ist das Phasenrauchen, welches auch als Phasenfluktuation bezeichnet wird, über die OFDM Symbole so groß, dass selbst bei geringem Phasenrauschen eine Leistungsdegradation des Systems eintritt, welche keine zuverlässige Übertragung der Nutzinformation mehr erlaubt.

Der Gleichphasenfehler eines OFDM-Symbols entspricht dem Gleichanteil der Fouriertransformation einer Phasenrauschrealisierung und approximiert auch den mittleren Phasenversatz $\bar{\phi}$, wie die folgende Gleichung zeigt

$$E_0 = \frac{1}{N}\sum_{n=0}^{N-1} e^{j\phi[n]}$$

$$= \frac{1}{N}\sum_{n=0}^{N-1} e^{j\bar{\phi}} \underbrace{e^{j\Delta\phi[n]}}_{\approx 1} \approx e^{j\bar{\phi}}.$$

$$2$$

In diesem Zusammenhang repräsentiert $\Delta\phi[n]$ die instantane Phasenabweichung vom mittleren Phasenversatz $\bar{\phi}$. Ist diese Phasenabweichung verschwindend gering, so entspricht der CPE exakt der Fouriertransformation des mittleren Phasenversatzes.

Die Struktur des CPE erlaubt eine einfache Schätzung und Kompensation des Gleichphasenfehlers, wobei besonders die Schätzung mittels bekannter linearer Schätzverfahren realisiert werden kann. Für einen linearen Schätzer berechnet sich der CPE durch

$$\hat{E}_0 = \mathbf{g}\mathbf{Y} = \mathbf{g}\mathbf{H}\mathbf{S}E_0 + \mathbf{g}\Xi$$

$$3$$

und entspricht einer linksseitigen Multiplikation des Empfangsvektors **Y** mit einer Filtermatrix **g**. Die einfachste Filtermatrix resultiert aus dem ZF-Ansatz, welcher auch vorzugsweise in der Literatur, beispielsweise in [24] diskutiert wird.

Ausgangspunkt sind Pilotsymbole, welche am Empfänger bekannt sind, sowie der Kanal an diesen Pilotpositionen. Definiert P = $\{p_1, p_2, \cdots, p_P\}$ die

Menge der Pilotpositionen, so entspricht

$$\mathbf{A}_{\mathbb{P}} = \mathbf{H}_{\mathbb{P}}\mathbf{S}_{\mathbb{P}}$$

$$4$$

gleich dem Empfangssignal einer störungsfreien Übertragung der Pilotsymbole, so dass die Filtermatrix für die Schätzung des CPEs angegeben werden kann als

$$\mathbf{g}_{ZF} = (\mathbf{A}_{\mathbb{P}}^{\mathrm{H}}\mathbf{A}_{\mathbb{P}})^{-1}\mathbf{A}_{\mathbb{P}}^{\mathrm{H}}.$$

$$5$$

Der Vorteil der ZF-Schätzung ist die geringe Komplexität, denn neben einfacher Vektormultiplikation erfolgt nur die Invertierung eines skalaren Wertes. Demgegenüber steht der Nachteil einer eventuellen Rauschverstärkung, da das Rauschen im Filteransatz nicht mit berücksichtigt wird.

Die Rauschvarianz wird beim MMSE (MMSE ... Minimum mean squared error)-Filteransatz mit einbezogen, jedoch auf Kosten einer nicht perfekten Interferenzunterdrückung. Eine signifikante Verbesserung der Leistungsfähigkeit konnte jedoch nicht festgestellt werden.

Die Phasenrauschschätzung kann beispielsweise im Frequenzbereich durchgeführt werden, wie nachfolgend ausgeführt.

Der Einfluss von Phasenrauschen auf die Leistungsfähigkeit von OFDM-Systemen wurde schon eingehend in der Literatur [25] diskutiert. Dabei zeigt sich die kontinuierliche Präzisierung der Effekte von Phasenrauschen, angefangen von der reinen Betrachtung des CPEs bis hin zur Modellierung der ICI.

Erste Ansätze zur Kompensation der ICI in einer reinen AWGN-Umgebung (AWGN ... Additive white Gaussian noise) sind in [7] gegeben. Aufbauend auf einer Taylorreihenapproximation der Phasenrauschtrajektorie erfolgt eine MMSE basierte Schätzung dieser. Die mathematische Beschreibung, die ICI im Frequenzbereich als gewichtete Summe von Sendesymbol, Kanal und Harmonische des Phasenrauschens darzustellen, wurde erstmalig und unabhängig voneinander in den Arbeiten [26] und [27] vorgestellt. Beide Autoren entwickelten in ihren Folgearbeiten verbesserte Algorithmen zur Kompensation der ICI. So sind in [8] Verfahren vorgestellt, welche die Phasenrauschharmonischen mit Hilfe eines MMSE-Ansatzes schätzen. Es wird aber in der Arbeit immer davon ausgegangen, dass der Kanal vollkommen bekannt ist und die gesendeten Symbole zum Teil a-priori bekannt sind, zum Beispiel durch eine vorangegangene CPE-Korrektur und - Entzerrung. Die eingeschränkte Kenntnis der gesendeten Symbole wird in [9] durch iterative Verfahren zum Teil aufgehoben. Durch Einbeziehen des Decoders ist eine zuverlässigere Bestimmung der gesendeten Symbole möglich, was den Schätzprozess verbessert. Jedoch wird in der Arbeit der Kanal als bekannt vorausgesetzt. Außerdem ist die Auswahl der zur Schätzung des Phasenrauschens benötigten Unterträger nicht optimal im Sinne der vom Decoder gegebenen a-priori-Information. Ein weiterer Verbesserungspunkt ist die Berechnung der Restinterferenz.

Die Phasenrauschschätzung kann beispielsweise im Zeitbereich durchgeführt werden, wie nachfolgend ausgeführt.

In der Literatur existieren vereinzelt Ansätze das Phasenrauschen im Zeitbereich zu schätzen. Eine Auswahl vielversprechender Verfahren ist im ersten kurzen Teil dieses Abschnittes gelistet. Der Nachteil der dort beschriebenen Algorithmen ist jedoch, dass sie entweder für Ein- oder für Mehrträgerverfahren konzipiert sind und somit nicht universell einsetzbar sind.

In [10] und [11] sind erste Vorschläge für Mehrträgerverfahren dargestellt. Die grundlegende Idee ist, die Phasenrauschtrajektorie mit Hilfe von Trainingssymbolen und einem LS-Ansatzes zu bestimmen. Dabei wird das Phasenrauschen durch ein linearisiertes Modell approximiert, welches aber nur bedingt das wahre Verhalten des Phasenrauschens widerspiegelt.

In [12] wurde als erstes die Idee einer gemeinsamen Phasenrauschschätzung und Decodierung vorgestellt. Der Ansatz beruht auf dem Prinzip des Austausches von Informationen (Nachrichten) (engl. MP ... massage passing) zwischen Knotenpunkten in einem Faktorgraphen (engl. FG ... factor graph), siehe [13], wie es zum Beispiel bei der Decodierung von LDPC Codes schon bekannt ist. Um dieses Verfahren durchzuführen, muss eine Faktorisierung der Verbundwahrscheinlichkeitsdichte aller Variablen erfolgen.

Diese Dichte zu bestimmen, ist besonders in Systemen mit mehreren Störgrößen sehr umständlich, weshalb bis jetzt nur AWGN-Kanäle untersucht wurden. Eine Erweiterung dieses Ansatzes erfolgte in den Arbeiten von [14] und [15] durch einen Vergleich verschiedener Faktorisierungsarten bezüglich ihrer Leistungsfähigkeit und Komplexität. Die erzielten Ergebnisse dieses Ansatzes sind durchaus beeindruckend, jedoch sind neben der Beschränkung auf AWGN-Kanäle nur Einträgerverfahren untersucht worden.

Für Mehrträgerverfahren und frequenzselektive Kanäle gibt es erste Beiträge in der Arbeit [16], wo der Ansatz der Faktorgraphbeschreibung und der damit verbundene sum-product (engl.) Algorithmus zur gemeinsamen Schätzung von Phasenrauschen und Frequenzversatz genutzt wird. Jedoch ist in dieser Arbeit nicht mehr die Rede von einer gemeinsamen Decodierung der Symbole und Schätzung der Störgrößen, stattdessen werden der Kanal als auch die Sendesymbole als bekannt vorausgesetzt. Die Kenntnis der Sendesymbole stützt sich dabei auf einen iterativen Detektor-Decoder-Ansatz.

Ein weiteres Verfahren, welches auch einen iterativen Ansatz zur Schätzung des Phasenrauschens im Zeitbereich hat, ist in der Veröffentlichung von [17] behandelt. Auch dort ist die Beschränkung auf AWGN-Kanäle fallen gelassen worden. Mit den L-Werten des Dekoders und unter der Annahme, dass das Phasenrauschen einer Gaußverteilung genügt, wird eine Kostenfunktion definiert, deren Lösung auf ein Regelkreisprinzip hinausläuft. Das in der Arbeit vorgestellte Optimierungsverfahren setzt jedoch als Nebenbedingung, dass jedes Konstellationssymbol die gleiche Leistung hat, das heißt, der Abstand vom Koordinatenursprung für jedes Sendesymbol identisch ist. Somit werden höher valente QAM-Übertragungsverfahren ausgeschlossen.

Der Erfindung liegt somit die Aufgabe zugrunde, ein Verfahren zur Schätzung und Kompensation von nichtlinearem, multiplikativem Phasenrauschen zu schaffen, mit welchem eine Reduzierung des Aufwands erreicht und die Flexibilität des Verfahrens verbessert wird.

In einer Veröffentlichung von Denis Petrovic, Wolfgang Rave und Gerhard Fettweis mit dem Titel "Common phase error due to phase noise in OFDM - estimation and suppression", IEEE-PIMRC 2004, ist ein Verfahren zur Schätzung und Kompensation von nichtlinearem, multiplikativem Phasenrauschen offenbart, bei welchem ein Phasenrauschtrajektor, welcher eine Schätzung einer Realisierung eines Phasenrauschprozesses abbildet, geschätzt wird, mittels dessen eine Kompensation des Phasenrauschens erfolgt.

Dieser bekannte Stand der Technik realisiert nur eine unzureichende Schätzung des nichtlinearen, multiplikativen Phasenrauschens.

Gemäß der Erfindung wird die Aufgabe durch das in Anspruch 1 angegebene Verfahren gelöst.

Die erfindungsgemäß ermittelten Phasenrauschtrajektoren $\hat{\phi}$ werden zur Kompensation des Phasenrauschens genutzt. Diese kann zum einen durch eine Multiplikation der Empfangsfolge mit dem konjugiert komplexen der geschätzten Phasenrauschtrajektoren $\hat{\phi}$ im Zeitbereich oder mittels einer Entfaltung im Frequenzbereich erfolgen.

Die Erfindung soll nachfolgend anhand eines Ausführungsbeispiels näher erläutert werden. In den zugehörigen Zeichnungen zeigt

Fig. 1  eine Darstellung des Phasenrauschens an einem Sender und einem Empfänger,

Fig. 2  eine Darstellung eines 16-QAM-Konstellationsdiagrams unter Phasenrauschen mit einem freilaufenden Oszillator mit einer Oszillatorkonstante: $c_{vco} = 3 * 10^{-17}$s,

Fig. 3  ein Blockschaltbild eines spannungsgesteuerten Oszillators (VCO),

Fig. 4  eine Darstellung eines OFDM-Übertragungssystems,

Fig. 5  eine Abbildung der OFDM-Empfängerseite,

Fig. 6  ein generalisiertes Systemmodell mit Kalman-Filterung,

Fig. 7  ein phasenrauschbasiertes Systemmodell mit Kalman-Filterung,

Fig. 8a  eine Darstellung des FER Verlust nach ICI-Korrektur, HiperLanA Kanal, 64-QAM,

Fig. 8b    eine Darstellung des SNR Verlust nach ICI-Korrektur, HiperLanA Kanal, 64-QAM,

Fig. 9    ein weiteres Phasenrauschbasiertes Systemmodell mit Kalman-Filterung und

Fig. 10    eine Algorithmus zur Durchführung des erfindungsgemäßen Verfahrens.

Unter Phasenrauschen ist eine zufällige Veränderung der Phasenlage des Empfangssignals zu verstehen, wobei diese Störung zum Beispiel durch nicht perfekte Oszillatoren, wie in [1] beschrieben, Schwankungen des Abtastzeitpunktes während der Analog-Digital-Wandlung, wie in [2] dargestellt, aber auch durch Vibrationen, wie in [3] ausgeführt, verursacht werden kann.

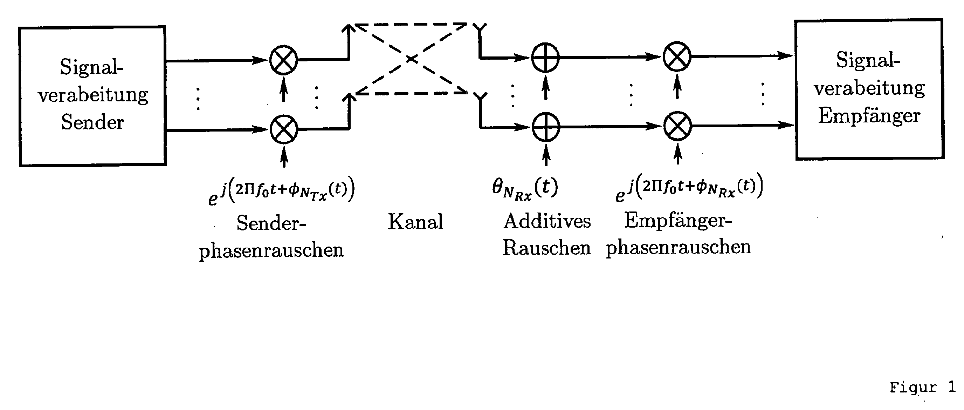

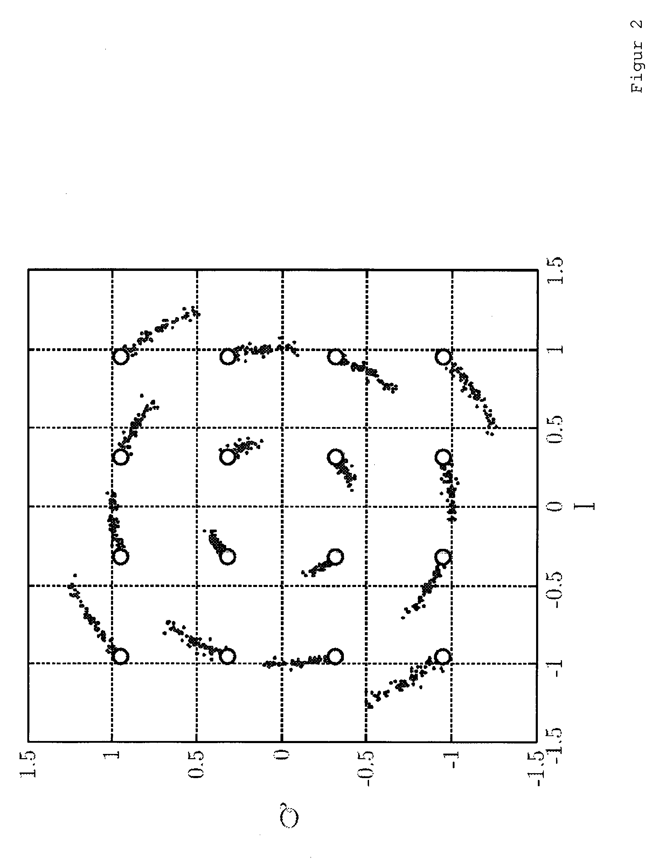

Anhand dieser Beispiele zeigt sich, dass die Quellen von Phasenrauschen vielfältig sind und das Phasenrauschen in den verschiedensten Anwendungsgebieten auftritt. Als Anwendungsgebiet beschränkt sich diese Beschreibung auf die Problematik des Oszillatorphasenrauschens, wie es beispielhaft in der Figur 1 dargestellt ist. Anhand der Abbildung ist ersichtlich, dass Phasenrauschen am Sender mit $exp(j\phi_{T_x}(t))$ als auch am Empfänger mit $exp(j\phi_{R_x}(t))$ den Mischprozess beeinflusst. Die dabei entstehende multiplikative Störgröße führt zu einer Verzerrung des Konstellations-diagramms, wie es für eine 16-QAM und einem IEEE 802.11a artverwandten System in der Figur 2 sichtbar wird. Für eine mögliche Kompensation gilt es, diese Fluktuationen möglichst gut zu modulieren und deren Einfluss auf die Signalübertragung zu charakterisieren.

In der Literatur existieren verschiedene Ansätze zur Modellierung von Phasenrauschen im Basisband. Um das Phasenrauschen möglichst akkurat zu beschreiben, wird ein Modell verwendet, das die Phasenfluktuation $\phi(t)$ nicht direkt angibt, sondern über eine zeitlich schwankende Momentanfrequenz eine stochastische Zeitverschiebung $\alpha(t)$ betrachtet. Das Ausgangssignal eines idealen Oszillators ist ein exakt periodisches Signal $x_0(t)$. Störungen, wie ther-misches Rauschen, 1/$f$-Rauschen und Schrotrauschen im Oszillator führen zu einer Abweichung von dieser idealen Signalform. In Anlehnung an die in [1] und [4] dargestellten Ausführungen werden alle Rauschquellen zu einer weißen, gaußschen Störgröße zusammengenommen und ein Modell eingeführt, dass eine Realisierung des Ausgangssignals $x_s(t)$ eines realen Oszillators wie folgt angeben lässt

$$x_s(t) = x_0\big(t + \alpha(t)\big) + \eta(t).\qquad\qquad 14$$

Die Variable $\alpha(t)$ beschreibt eine Realisierung der schon erwähnten zeitveränderlichen, zufälligen Zeitverschie-bung $\alpha(t)$, deren Modellierung und statistischen Eigenschaften im Laufe dieser Beschreibung näher betrachtet werden. Der zweite Term $\eta(t)$ beschreibt eine additive Amplitudenverschiebung und wird als Orbitalabweichung bezeichnet. In einem stabilen System, von dem hier ausgegangen wird, nimmt die Orbitalabweichung vernachlässigbar kleine Werte an und wird deshalb in den folgenden Analysen nicht weiter betrachtet.

Zusätzlich wird angenommen, dass das Oszillatorausgangssignal $x_0(t)$ nur aus einer Grundwelle besteht. Eine Erweiterung der nichtlinearen Analyse auf zusätzliche Oberwellen sowie gefärbtes Rauschen wurde in [5] vorgestellt. Weitere tiefgründige Analysen von Phasenrauschen und dessen Einfluss auf Abtast-Jitter in Analog-Digital-Wandlern sind in der Dissertation [2] diskutiert.

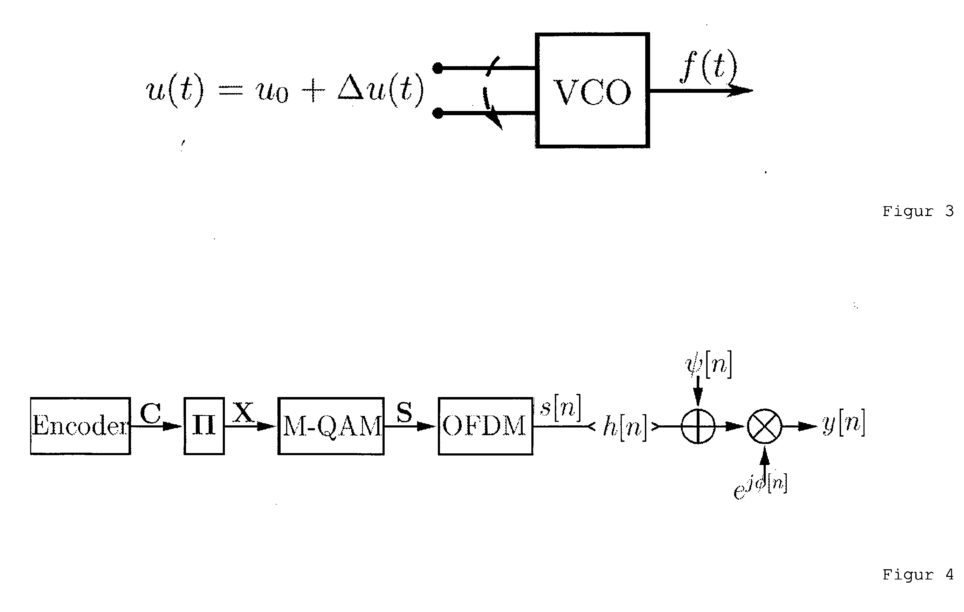

Eine einfache und weit verbreitet Modellierung des Phasenrauschens beruht auf der Wirkungsweise eines freilaufenden Oszillators, dessen Blockschaltbild in Figur 3 dargestellt ist. Ein freilaufender Oszillator besteht prinzipiell aus einem spannungsgesteuerten Oszillator (engl. VCO (voltage controlled oscillator), bei dem eine Eingangsspannung $u(t)$ auf eine Frequenz $f(t)$ abgebildet wird. Analog zu [1] wird angenommen, dass alle Rauschquellen zu einer weißen, gaußschen Rauschquelle am Eingang des Oszillators zusammengefasst werden können.

Die Eingangsspannung am Oszillator ergibt sich dann als Linearkombination einer konstanten Spannung $u_0$ und einer zeitabhängigen, stochastischen Spannungsschwankung $\Delta u(t)$. Zusätzlich wird angenommen, dass die durch die Rauschquelle hervorgerufenen kleinen Spannungsänderungen $\Delta \underline{u}(t)$ zu einer linearen Änderung der Frequenz $\Delta \underline{f}(t)$ am Ausgang des Oszillators führen. Die Frequenz am Ausgang des spannungsgesteuerten Oszillators lässt somit schreiben als

$$\underline{f}(t) = f_0(u_0) + \Delta \underline{f}(\Delta \underline{u}(t))\qquad\qquad 15$$

Die zufälligen Schwankungen der Momentanfrequenz führen zu einer zufälligen Änderung des Oszillatoraus-gangssignals, gegeben als

$$\underline{x}_s(t) = A\cos\left(2\pi f_0 t + \phi_0 + 2\pi \underbrace{\int_0^t \Delta\underline{f}(t')\mathrm{d}t'}_{\underline{\phi}(t)}\right).$$

16

Die Variable $\underline{\phi}(t)$ stellt das stochastische Phasenrauschen eines Oszillators dar, deren Realisierung einer zufälligen, instantanen Phasenlage des periodischen Ausgangssignals entspricht.

Mit Hilfe von Gleichung 16 lässt sich folgender formale Zusammenhang zwischen der stochastischen Zeitverschiebung $\underline{\alpha}(t),$ dem Phasenrauschen und der normierten Momentanfrequenz herstellen

$$\underline{\alpha}(t) = \frac{1}{2\pi f_0}\underline{\phi}(t) = \sqrt{c_{vco}}\underbrace{\int_0^t \underline{\varsigma}(t')\mathrm{d}t'}_{\underline{W}(t)}.$$

17

Die lineare Abbildung der gaußschen Störgrößen am Eingang des Oszillators führt zu einem mit der oszillatorspezifschen Konstante $c_{vco}$ gewichteten Standard-Gaußprozess $\varsigma(t),$ dessen Mittelwert null und dessen Varianz eins sind. Das stochastische Integral über einen Standard-Gaußprozess wird als Wienerprozess $\underline{W}(t)$ bezeichnet, dessen Varianz linear mit der Zeit steigt und weiterhin mittelwertfrei ist. Der Wienerprozess ist zeitlich nicht differenzierbar, jedoch lässt sich ein Zusammenhang zu einem Standard-Gaußprozess über einem differentiellen Wienerprozess definieren als

$$\mathrm{d}\underline{W} \equiv \underline{W}(t + \mathrm{d}t) - \underline{W}(t) = \underline{\varsigma}(t)\mathrm{d}t.$$

18

Wird ein Abtastintervall $\Delta(t)$ eingeführt, kann die Definition des differentiellen Wienerprozesses dahingehend ausgenutzt werden, um diskrete Zeitfluktuationen $\underline{\alpha}[n]$ an gegebenen Abtastpunkten $n \cdot \Delta t$ zu generieren. Die Lösung besteht darin, das Integral in Gleichung 4 durch eine Summe von Bereichsintegralen auszudrücken

$$\frac{1}{2\pi f_0}\underline{\phi}[n] = \underline{\alpha}[n] = \begin{cases} \underline{\varsigma}(0), & \text{für } n = 0 \\ \sum_{i=0}^{n-1} \sqrt{c_{vco}} \underbrace{\int_0^{\Delta t} \underline{\varsigma}(t' + i \cdot \Delta t)\mathrm{d}t'}_{\underline{W}_i(\Delta t)}, & \text{für } n > 0. \end{cases}$$

19

Für den Zeitpunkt $n \cdot t = 0$ existiert eine Realisierung des Gaußprozesses $\varsigma(0)$. Jedes Bereichsintegral resultiert für sich in einen unabhängigen Wienerprozess $\underline{W}_i(\Delta t),$ der einer mittelwertfreien Gaußverteilung mit Varianz $\Delta t$ genügt und mit $\sqrt{c_{vco}}$ gewichtet ist. Die Varianz der diskreten Zeitverschiebung zum Zeitpunkt $n \cdot \Delta t$ ergibt sich als Summe der Einzelvarianzen und steigt linear mit der Zeit

$$\sigma_\alpha^2[n] = n \cdot c_{vco} \cdot \Delta t. \tag{20}$$

Gleichung 20 impliziert, dass das Phasenrauschen eines Oszillators durch eine Konstante $c_{vco}$ charakterisiert werden kann. Ein analytischer Ausdruck für die Konstante $c_{vco}$ ist über das Ausgangs-Leistungsdichtespektrum (LDS) des gestörten Oszillatorausgangssignals definiert und soll hier exemplarisch für ein rein sinusförmiges Oszillatorsignal angegeben werden.

In der Veröffentlichung [1] ist eine Verallgemeinerung für Oszillatorsignale mit Oberwellen dargestellt.

Nachfolgend wird das der Erfindung zugrundeliegende Systemmodell erläutert. Phasenrauschen führt im digitalen Basisband zu einer multiplikativen Störung am Sender sowie am Empfänger. Im Bezug auf Mehrantennensysteme wird angenommen, dass ein Oszillator alle Antennen speist, das heißt, das Phasenrauschen ist an allen Antennen mit der gleichen Realisierung vorhanden. Diese Annahme ist gerechtfertigt, da mehrere parallel arbeitende Oszillatoren den Hardwareaufwand bedeutend erhöhen würden.

Eine Systembeschreibung mit mehreren Oszillatoren ist möglich und prinzipiell sind in die diesem Kapitel betrachteten Verfahren zur Phasenrauschkompensation in der Lage, ein solches System zu entzerren, jedoch wäre in einem solchen Fall eine individuelle Abarbeitung jedes einzelnen Antennenstroms nötig, was die Komplexität linear mit der Anzahl der Antennen anwachsen lässt.

Aus ökonomischer Sicht sollte das mobile Endgerät in seiner Produktion so günstig wie möglich sein, weshalb in vielen drahtlosen Netzwerken das analoge Frontend des Endgerätes schlechter ausgestattet ist als der Accesspoint. Im Fall eines Datenverkehrs vom Accesspoint zum Endgerät kann dann mit guter Näherung davon ausgegangen werden, dass das Phasenrauschen an der Empfängerseite wesentlich dominanter ist. Zusätzlich wurde in der Arbeit [6] gezeigt, dass senderseitiges Phasenrauschen als äquivalentes Empfängerphasenrauschen betrachtet werden kann. Das Zeitsignal an der Empfangsantenne **d** unter Phasenrauschen ergibt sich somit zu

$$y_d[n] = \sum_{u=1}^{N_{Tx}} \left( s_u[n] * h_{d,u}[n] \right) \mathrm{e}^{j\phi[n]} + \theta_u[n] \mathrm{e}^{j\phi[n]}, \tag{21}$$

wobei * für die bekannte Faltung zwischen Sendesignal und Kanal steht. Die statistischen Eigenschaften des AWGNs bleiben durch die Multiplikation mit dem Phasenrauschen unberührt, da nur eine zusätzliche Phasendrehung eintritt. In dieser Beschreibung wird eine blockweise Übertragung nach dem Prinzip des MIMO-OFDM-Konzept betrachtet. Für eine kompakte Notation erfolgt dafür die Beschreibung in Vektor-Matrix-Form über alle Antennen. Der Empfangsvektor im Frequenzbereich lässt sich darstellen als

$$\mathbf{Y} = \left( \mathbf{F} \otimes \mathbf{I}_{N_{Rx}} \right) \left( \boldsymbol{\zeta} \otimes \mathbf{I}_{N_{Rx}} \right) \boldsymbol{\upsilon} \left( \mathbf{h} \left( \boldsymbol{\varepsilon} \otimes \mathbf{I}_{N_{Tx}} \right) \left( \mathbf{F}^{-1} \otimes \mathbf{I}_{N_{Tx}} \right) \mathbf{S} + \boldsymbol{\Theta} \right), \tag{22}$$

mit $\otimes$ als Kroneckerprodukt. Mit Hilfe von geeigneten Matrizenmanipulationen kann die zirkulare Blockmatrix $(\boldsymbol{\zeta} \otimes \mathbf{I}_{N_{Rx}})$ $\mathbf{h} (\boldsymbol{\varepsilon} \otimes \mathbf{I}_{N_{Tx}})$ durch DFT Operationen diagonalisiert werden.

Das Ergebnis ist eine Blockdiagonalmatrix **H** mit den Elementen der Übertragungsfunktion des Kanals. Die Diagonalmatrix $\boldsymbol{\upsilon} = diag (\mathbf{e}) \otimes \mathbf{I}_{N_{Rx}}$ repräsentiert das empfängerseitige Phasenrauschen mit **Ng + N** von null verschiedenen Elementen. Das Hinzufügen und Entfernen des Schutzintervalls ändert nichts an der grundsätzlichen Struktur von $\boldsymbol{\upsilon}$, sondern reduziert nur die Dimension der Matrix. Die sich anschließende rechtsseitige und linksseitige Multiplikation mit den DFT-Matrizen führt zu einer zirkulanten Matrix der Form

$$\boldsymbol{\Upsilon} = \left( \mathbf{F} \otimes \mathbf{I}_{N_{Rx}} \right) \boldsymbol{\upsilon} \left( \mathbf{F}^{-1} \otimes \mathbf{I}_{N_{Tx}} \right). \tag{23}$$

Die Elemente dieser Matrix entsprechen der zeitdiskreten Fouriertransformation des Phasenrauschvektors **e**

$$\Upsilon = \begin{pmatrix} E_0 & E_{-1} & \cdots & E_{-(N-1)} \\ E_1 & E_0 & \cdots & E_{-(N-2)} \\ \vdots & \vdots & \ddots & \vdots \\ E_{N-1} & E_{N-2} & \cdots & E_0 \end{pmatrix} \otimes \mathbf{I}_{N_{Rx}},$$

24

mit

$$E_l = \frac{1}{N} \sum_{n=0}^{N-1} e^{-j2\pi ln/N} e^{j\phi[n]}$$

25

als Frequenzbereichsrepräsentation einer
Phasenrauschtrajektorie. Das Übertragungssystem nach Gleichung 21 lässt sich in bekannter kompakter Form darstellen als

$$\mathbf{Y} = \Upsilon \mathbf{HS} + \Psi = \mathbf{HS} \circledast (\mathbf{E} \otimes \mathbf{I}_{N_{Rx}}) + \Psi.$$

26

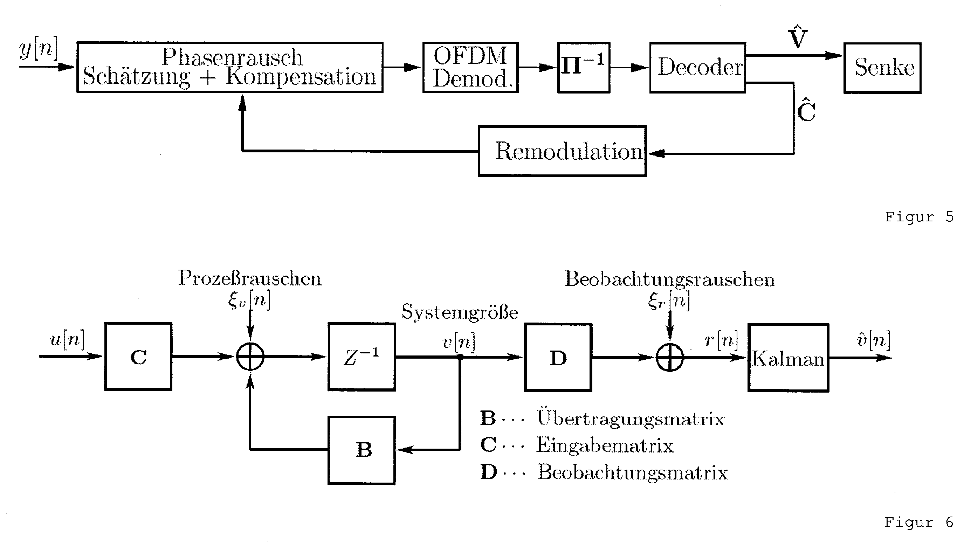

Dabei entspricht die rechte Darstellung einer zirkularen Faltung (⊛) des übertragenen Signals mit der Frequenzbereichsdarstellung des Phasenrauschens. Als Synonym für die Frequenzbereichsdarstellung des Phasenrauschens wird auch der Begriff Phasenrauschharmonische benutzt.
Um die Einschränkungen der existierenden Verfahren zu umgehen, wurde vom Autor ein Verfahren entwickelt, welches das Phasenrauschen im Zeitbereich mit Hilfe eines Kalman-Ansatzes bestimmt. Der entwickelte Algorithmus ist dabei völlig transparent gegenüber dem zugrundeliegenden Übertragungsverfahren und kann für Ein- oder Mehrträgerkonzepte verwendet werden. Der Fokus dieser Beschreibung liegt jedoch bei OFDM als Mehrträgerverfahren, weshalb der Kalman-Filter auch für diese Anwendung vorgestellt wird.
Kalman-Filterung zur Schätzung des Phasenrauschens wurde schon in [18] betrachtet, jedoch bezieht sich der dort präsentierte Algorithmus auf eine reine Schätzung des CPEs von OFDM-Symbol zu OFDM-Symbol. Ansätze zur Phasenrauschermittelung auf Abtastebene wurden vom Autor in der Arbeit [19] gezeigt, welche auch die Grundlage dieses Abschnittes bildet. Zusätzlich wurden in der Arbeit Verfahren zur Reduktion der Komplexität vorgestellt.
Im Sinne einer geschlossenen Abhandlung ist in der Figur 4 noch einmal ein Einantennenübertragungssystem mit Phasenrauschen dargestellt. An der Empfängerseite erfolgt eine iterative Entzerrung und Detektion der Empfangsdaten, wie es in Figur 5 gezeigt ist.
Das Hauptaugenmerk der folgenden Beschreibung richtet sich auf das Modul Phasenrausch-Schätzung und -Kompensation. Die Kompensation lässt sich schnell erklären, denn sie besteht darin, die Empfangsfolge mit dem Konjugiert komplexen der geschätzten Phasenrauschtrajektorie zu multiplizieren.
Die ingenieurstechnische Leistung besteht vielmehr darin, die für die Kompensation benötigte Phasenrauschtrajektorie zu schätzen, wofür an dieser Stelle eine modifizierte Kalman-Filterung verwendet wird.
Figur 6 zeigt eine schematische Darstellung eines generalisierten Systemmodells mit Kalman-Tracking, das heißt Schätzung der Systemgröße $\hat{v}[n]$.
Anstatt das Phasenrauschen mit Hilfe eines zufälligen Vektors zu modellieren, wird die Phasenrauschfluktuationen $\phi[n]$ selber betrachtet

$$\mathrm{e}^{j\phi[n]} = \mathrm{e}^{j(\phi[n-1]+\Delta\phi[n])}.$$

$$6$$

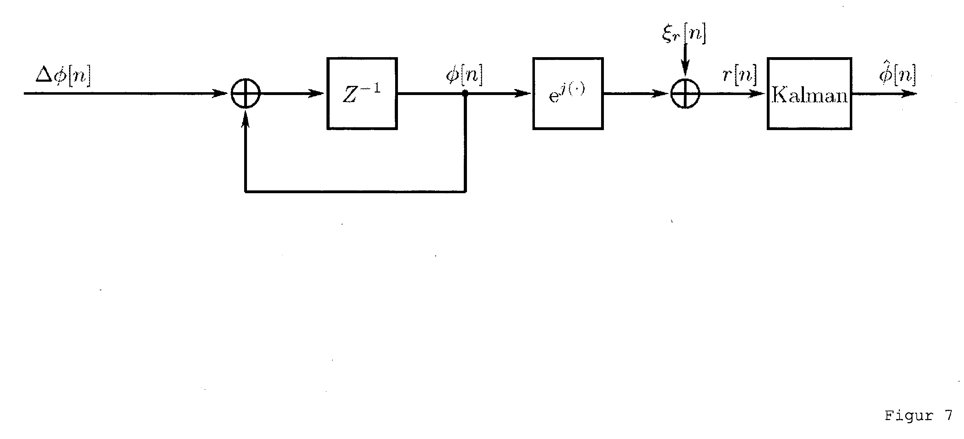

Mit dem entscheidenden Vorteil, dass $\Delta\phi$**[n]** für einen freilaufenden Oszillator direkt proportional zur stochastischen Zeitverschiebung $\underline{\alpha}$**[n]** aus Gleichung 6 ist und somit keine Einschränkungen für den Wertebereich existieren. Das für eine solche Modellierung angepasste Blockdiagramm ist in Figur 7 dargestellt. Es zeigt sich jedoch, dass mit $e^{(\cdot)}$ eine nichtlineare Beobachtungsmatrix gegeben ist, was zur Folge hat, dass ein linearer Kalman-Ansatz nicht mehr anwendbar ist. Dieses Problem kann zum Beispiel durch die Strategie des erweiterten Kalman-Filters (engl. EKF ... extended kalman filter) gelöst werden, beidem die nichtlineare Funktion durch eine Taylorreihenapproximation wieder auf eine lineare Funktion abgebildet wird, wie in [20] beschrieben. Eine solche Approximation kann aber zu großen Abweichungen zwischen der wahren Korrelationsmatrix der Beobachtungsgröße und der durch die Linearisierung modifizierten Korrelationsmatrix führen. Außerdem beinhaltet die Linearisierung die Berechnung einer Jacobimatrix, welche rechentechnisch aufwändig ist. Aufgrund der genannten Nachteile wird an dieser Stelle eine Form des Kalman-Filters verwendet, welche auf der so genannten unscented-Transformation basiert, wie in [21] und [22]dargestellt. Die Grundidee dieser Transformation ist die Tatsache, dass es einfacher ist, eine Verteilung genauer zu approximieren, als eine beliebige nichtlineare Abbildung. Für die Approximation wird ein Satz von Punkten (SP ... sigma points) der nichtlinearen Transformation unterzogen und anhand deren Lage im Bildbereich wird die gesuchte Kovarianzmatrix bestimmt. In [21] ist gezeigt, dass schon wenige SP für eine akkurate Approximation ausreichen. Die Wahl der SP geschieht dabei nicht zufällig, sondern erfolgt anhand einer vorgegeben Berechnungsvorschrift basierend auf Mittelwert und Varianz der Systemgröße vor der Transformation.

Eine detaillierte Darstellung des Algorithmus zur Schätzung des Phasenrauschens mit Hilfe der unscented Kalman-Filterung ist in dieser Beschreibung weiter hinten zu finden. Die dafür nötigen Eingangsgrößen, namentlich die Beobachtungsgröße [n] und das Beobachtungsrauschen $\xi_r$[n], sind wie folgt gegeben. Das Empfangssignal unter Phasenrauschen lässt sich für ein Einantennensysteme schreiben als

$$y[n] = \underbrace{(s[n] * h[n])}_{a[n]} \mathrm{e}^{j\phi[n]} + \psi[n].$$

$$7$$

Nach erfolgreicher CPE-Korrektur und -Decodierung ist eine erste Schätzung $\hat{S}$ der Sendesymbole $S$ vorhanden, was im Zeitbereich einer Folge $\hat{s}$ entspricht und zum nachfolgenden Ausdruck führt

$$\hat{a}[n] = s[n] * h[n] = a[n] + \Delta a[n].$$

$$8$$

Mit Hilfe dieses Terms lässt sich das Empfangssignal auch darstellen als

$$y[n] = \hat{a}[n]\mathrm{e}^{j\phi[n]} - \Delta a[n]\mathrm{e}^{j\phi[n]} + \psi[n],$$

$$9$$

wodurch sich nach Division mit $\hat{a}$[n] die gewünschte Beobachtungsgröße $r$[n] ergibt

$$r[n] = \mathrm{e}^{j\phi[n]} + \underbrace{\frac{\psi[n] - \Delta a[n]\mathrm{e}^{j\phi[n]}}{\hat{a}[n]}}_{\xi_r[n]} .$$

10

Der Parameter $\xi_r[n]$ entspricht dem der transformierten Störgröße additiv überlagertem Beobachtungsrauschen, wie in der Figur 7 gezeigt, dessen Varianz für die Kalman-Filterung eine entscheidende Rolle spielt, und sich angeben lässt als

$$P_{\xi_r}[n] = \mathrm{Var}\left[\frac{\psi[n] - \Delta\underline{a}[n]\mathrm{e}^{j\phi[n]}}{\hat{a}[n]}\right] .$$

11

Zu beachten ist, dass $\hat{a}[n]$ nicht stochastisch ist, sondern durch die Decodierung einen deterministischen Charakter besitzt. Somit ergibt sich folgende Kette

$$P_{\xi_r}[n] = \frac{1}{|\hat{a}[n]|^2} = \left(\mathrm{Var}\left[\underline{\psi}[n]\right] + |\mathrm{e}^{j\phi[n]}|^2\mathrm{Var}\left[\Delta\underline{a}[n]\right]\right)$$

$$= \frac{1}{|\hat{a}[n]|^2}\left(N_0 + \mathrm{Var}\left[\Delta\underline{a}[n]\right]\right) .$$

12

Die Varianz von $\Delta a[n]$ lässt sich als Vektor über ein OFDM-Symbol, aufgrund der Unabhängigkeit der Sendesymbole im Frequenzbereich, darstellen als

$$\mathrm{Var}\left[\Delta\underline{a}[n]\right] = \mathrm{Var}\left[\mathrm{IDFT}_N\left(\Delta\underline{A}\right)\right]$$

$$= \mathrm{IDFT}_N\left(\mathbf{H} \cdot \mathrm{Var}\left[\underline{\Delta S}\right] \cdot \mathbf{H}^{\mathrm{H}}\right)$$

13

mit *Var[$\underline{\Delta S}$]* als Vektor der Varianzen der weichen Symbole bzw. des Schätzfehlers, deren Berechnung über die L-Werte gegeben ist, siehe auch [23]. Am Ausgang des Kalman-Filters ergibt sich letztendlich eine geschätzte Trajektorie, mit der das Phasenrauschen im Zeitbereich kompensiert wird.

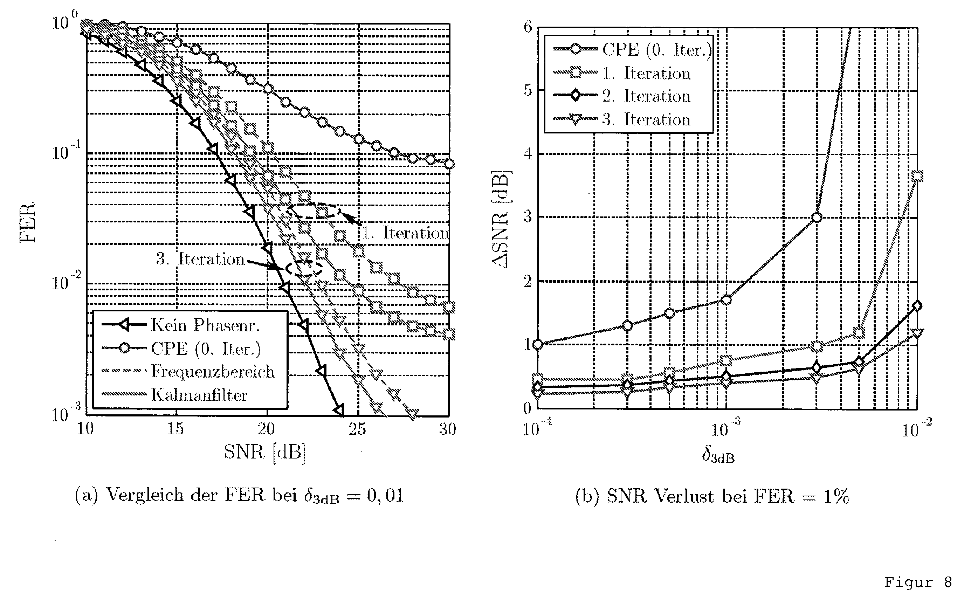

Nachfolgend werden die Ergebnisse der erfindungsgemäßen Lösung dargestellt. Figur 8a zeigt einen Vergleich der Leistungsfähigkeit eines Einantennensystems zwischen der Schätzung mehrere Phasenrauschharmonischer im Frequenzbereich und Kalman-Filterung. Es ist eine deutliche Leistungssteigerung zu erkennen, so ergibt sich zum Beispiel schon nach der ersten Iteration ein Gewinn von circa 2,5 dB bei einer Zielfehlerrate von 1%.

Jedoch ist der Kalman-Ansatz durch die Fehlerfortpflanzung während den Iterationen limitiert, denn für die Berechnung der Zeitbereichsfolge a werden alle geschätzten Sendesymbolvektoren benötigt, währenddessen bei der Frequenzbereichsschätzung nur ein relativ kleiner Satz von zuverlässigen Unterträgern verwendet wird. Diese Fehlerfortpflanzung erklärt auch den sichtbaren Fehlerteppich, denn die Leistungsfähigkeit wird durch die Fehlerrate in der nullten Iteration bestimmt. Ist diese gering, so ergibt sich auch einen niedrige Restfehlerrate. Diese Tatsache unterstreicht aber auch den Vorteil der Kalman-Filterung, nämlich dass keine Grundannahmen an den zu schätzenden Prozess gestellt werden. Ein konzentrierter hoher quadratischer Fehler zwischen der wahren und der geschätzten Phasenfluktuation an den Rändern eines OFDM-Symbols, wie es bei einer Frequenzbereichsschätzung vorkommt, aufgrund der inhärenten Annahme eines periodischen Signals, tritt bei der Kalman-Filterung nicht ein.

Um die Leistungsfähigkeit der Kalman-Filterung weiter zu beurteilen, ist in der Figur 8b der SNR-Verlust über der relativen Oszillatorgüte bei einer Zielfehlerrate von 1% abgetragen. Ein Vergleich mit der Literatur verdeutlicht, dass der Kalman-Filteransatz über den Iterationen prinzipiell immer bessere Ergebnisse erzielt als die Frequenzbereichsschätzung.

Dabei werden im mittleren Phasenrauschbereich Gewinne um die 0,5 dB erreicht, während bei starken Phasenrauschen bis zu 2,5 dB weniger SNR benötigt wird.

Ein bedeutender Vorteil der Kalman-Filterung ist, dass dieses Verfahren sowohl für Ein- als auch für Mehrträgersysteme einsetzbar ist. Außerdem stellt der Algorithmus keine Grundannahmen gegenüber dem Verlauf der Phasenrauschtrajektorie.

Dieser Abschnitt beinhaltet eine Modifikation der unscented Kalman-Filterung zu Schätzung von multiplikativen Phasenstörungen.

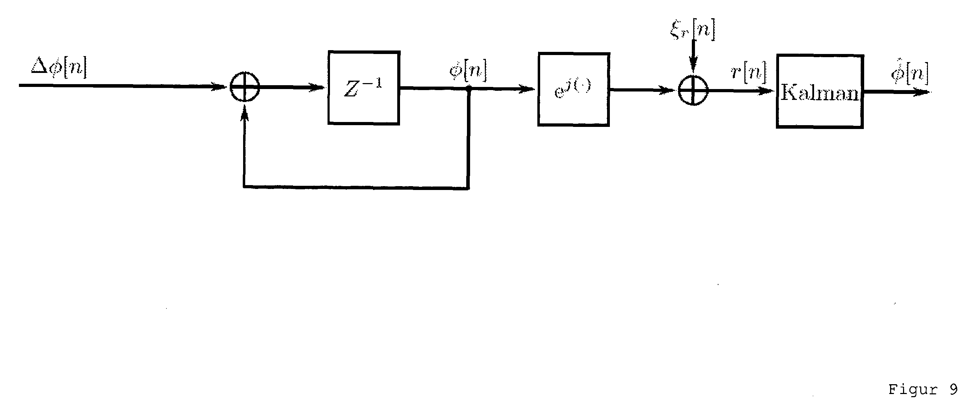

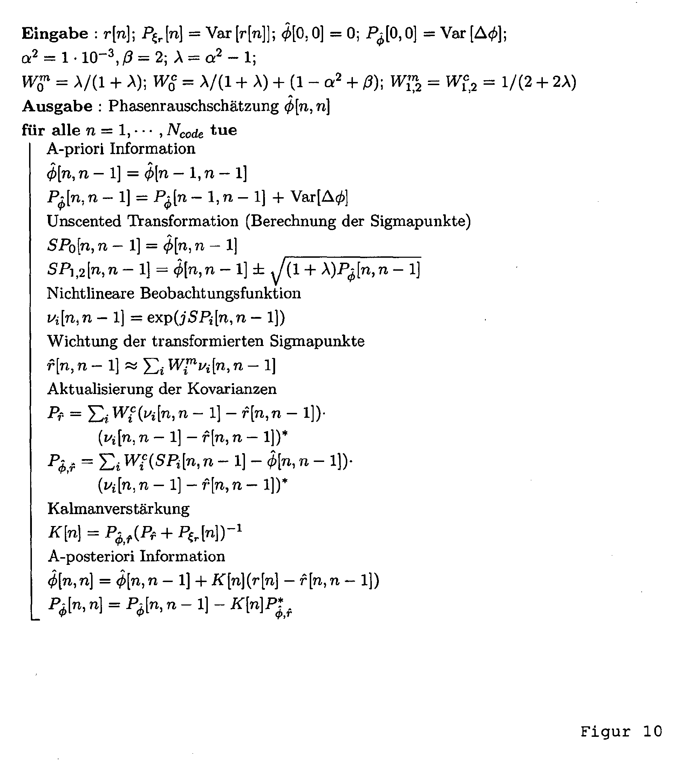

Ausgangspunkt des gegebenen Algorithmus, welcher in der Figur 10 als Ablaufplan dargestellt ist, ist eine Modellbildung nach Figur 9, wo das Phaseninkrement als Prozessrauschen interpretiert wird. Aufbauend auf diesem Gedanken ist in vorigem Abschnitt eine systemtheoretische Beschreibung eingeführt, die erlaubt Phasenfluktuationen mit Hilfe einer unscented Kalman-Filterung zu schätzen. Die dazu nötigen Größen sind der Eingabevektor $r[n]$ gemäß der Gleichung 10 und die mit diesem Vektor verbundene Varianz des Beobachtungsrauschens $\xi_r[n]$ gegeben in Gleichung 12. Als initialler Startwert der zu schätzenden Phasenlage kann jeder beliebiger Wert gewählt werden, denn der Kalman-Filter konvergiert innerhalb der zyklischen Erweiterung eines OFDM-Symbols, so dass der Startfehler keinen Einfluss auf die Systemleistung hat. Zur benutzten Indexnotation sei erwähnt, dass Werte mit dem Zeitstempel $[n, n-1]$ a-priori Information beschreiben, währenddessen Werte mit dem Index $[n,n]$ die a-posteriori Information zum Zeitpunkt $[n]$ beinhalten. Zu klären sind noch die Designparameter $\alpha^2, \beta, \gamma$, die zur Skalierung benutzt werden und Bestandteil der unscented-Transformation sind, siehe auch [21]. Die Wahl dieser Parameter kann prinzipiell frei erfolgen, jedoch werden in [22] Werte vorgeschlagen, die für ein gaußverteiltes Prozessrauschen ein optimales Ergebnis erzeugen. Da das Prozessrauschen in dem vorgestellten Modell gleich dem Phaseninkrement ist und dieses Inkrement für den freilaufenden Oszillator gaußverteilt ist, sollen die in [22] gegebenen Werte beibehalten werden.

## Literaturverzeichnis

[1] [Demir u. a. 2000] Demir, A.; Mehrotra, A.; Roychowdhury, J.: Phase Noise in Oscillators: A Unifying Theory and Numerical Methods for Characterization. In: IEEE Transactions on Circuits and System-Part I: Fundamental Theory and Applications 47 (2000), May, Nr. 5, S. 655-674

[2] [Löhning 2006] Löhning, Michael: Analyse und Modellierung der Effekte von Abtast-Jitter in Analog-Digital Wandlern, Technische Universität Dresden, Dissertation, 2006

[3] [Driscoll und Donovan 2007] Driscoll, M.M.; Donovan, J.B.: Vibration-Induced Phase Noise: It Isn't Just About the Oscillator. In: Proc. Joint with the 21st European Frequency and Time Forum Frequency Control Symposium IEEE International, 2007, S. 535-540. - ISSN 1075-6787

[4] [Demir 1997] Demir, Alper: Analysis and Simulation of Noise in Nonlinear Electronic Circusits and Systems, University of California, Berkeley, Dissertation, 1997

[5] [Demir 2002] Demir, A.: Phase Noise and Timing Jitter in Oscillators With Colored-Noise Sources. In: IEEE Transactions on Circuits and Systems-Part I: Fundamental Theory and Applications 49 (2002), Dec., Nr. 12, S. 1782-1791

[6] [Bittner u. a. 2007] Bittner, S.; Rave, W.; Fettweis, G.: Joint Iterative Transmitter and Receiver Phase Noise Correction using Soft Information. In: Proc. IEEE International Conference on Communications ICC '07, 24-28 June 2007, S. 2847-2852

[7] [Munier u. a. 2004] Munier, F.; Eriksson, T.; Svensson, A.: Receiver algorithms for OFDM systems in phase noise and AWGN. In: Proc. 15th IEEE International Symposium on Personal, Indoor and Mobile Radio Communications PIMRC 2004 Bd. 3, 2004, S. 1998-2002 Vol.3

[8] [Wu u. a. 2006] Wu, Songping; Liu, Pan; Bar-Ness, Yeheskel: Phase Noise Estimation and Mitigation for OFDM Systems. In: IEEE Transactions on Wireless Communications 5 (2006), Nr. 12, S. 3616-3625. - ISSN 1536-1276

[9] [Petrovic u. a. 2007] Petrovic, D.; Rave, W.; Fettweis, G.: Effects of Phase Noise on OFDM Systems With and Without PLL: Characterization and Compensation. In: IEEE Transactions on Communications 55 (2007), Nr. 8, S. 1607-1616. - ISSN 0090-6778

[10] [El-Tanany u. a. 2001] El-Tanany, M.S.; Wu, Yiyan; Hazy, L.: Analytical modeling and simulation of phase noise interference in OFDM-based digital television terrestrial broadcasting systems. In: IEEE Transactions on Broadcasting 47 (2001), Nr. 1, S. 20-31. - ISSN 0018-9316

[11] [Casas u. a. 2002] Casas, R.A.; Biracree, S.L.; Youtz, A.E.: Time domain phase noise correction for OFDM signals. In: IEEE Transactions on Broadcasting 48 (2002), Sept, Nr. 3, S. 230-236

[12] [Dauwels und Loeliger 2003] Dauwels, J.; Loeliger, H.-A.: Joint decoding and phase estimation: an exercise in factor graphs. In: Proc. IEEE International Symposium on Information Theory, 2003, S. 231-231

[13] [Kschischang u. a. 2001] Kschischang, F. R.; Frey, B. J.; Loeliger, H. A.: Factorgraphs and the sum-product algorithm. In: IEEE Transactions on Information Theory 47 (2001), Feb, Nr. 2, S. 498-519

[14] [Colavolpe u. a. 2005] Colavolpe, G.; Barbieri, A.; Caire, G.: Algorithms for iterative decoding in the presence of strong phase noise. In: IEEE Journal on Selected Areas in Communications 23 (2005), Sept., Nr. 9, S. 1748-1757

[15] [Barbieri u. a. 2007] Barbieri, A.; Colavolpe, G.; Caire, G.: Joint Iterative Detection and Decoding in the Presence of Phase Noise and Frequency Offset. In: IEEE Transactions on Communications 55 (2007), Jan., Nr. 1, S. 171-179

[16] [Merli und Vitetta 2008] Merli, F. Z.; Vitetta, G. M.: A Factor Graph Approach to the Iterative Detection of OFDM Signals in the Presence of Carrier Frequency Offset and Phase Noise. In: IEEE Transactions on Wireless Communications 7 (2008), March, Nr. 3, S. 868-877

[17] [Sabbaghian und Falconer 2008] Sabbaghian, M.; Falconer, D.: Joint Turbo Frequency Domain Equalization and Carrier Synchronization. In: IEEE Transactions on Wireless Communications 7 (2008), Jan., Nr. 1, S. 204-212

[18] [Petrovic u. a. 2003b] Petrovic, D.; Rave, W.; Fettweis, G.: Phase Noise Suppression in OFDM using a Kalman Filter. In: Proceedings of the International Symposium on Wireless Personal Multimedia Communications, 2003, S. 375-379 vol.3

[19] [Bittner u. a. 2009] Bittner, S.; Deng, E.; Frotzscher, A.; Fettweis, G.: Oscillator Phase Noise Compensation using Kalman Tracking. In: Proc. IEEE International Conference on Acoustics, Speech and Signal Processing ICASSP 2009, April 2009

[20] [Kay 1993] Kay, Steven M.: Fundamentals of Statistical Processing, Volume I: Estimation Theory. Prentice Hall PTR, 1993

[21] [Julier und Uhlmann 2004] Julier, S. J.; Uhlmann, J. K.: Unscented filtering and nonlinear estimation. In: Proceedings of the IEEE 92 (2004), Mar, Nr. 3, S. 401-422

[22] [Wan und Van Der Merwe 2000] Wan, E. A.; Van Der Merwe, R.: The unscented Kalman filter for nonlinear estimation. In: Proc. Adaptive Systems for Signal Processing, Communications AS-SPCC. The IEEE 2000, 1-4 Oct. 2000, S. 153-158

[23] [Bittner u. a. 2006] Bittner, S.; Zimmermann, E.; Fettweis, G.: Low Complexity Soft Interference Cancellation for MIMO-Systems. In: Proc. VTC 2006-Spring Vehicular Technology Conference IEEE 63rd Bd. 4, 7-10 May 2006, S. 1993-1997

[24] [Robertson und Kaiser 1995] Robertson, P.; Kaiser, S.: Analysis of the effects of phase-noise in orthogonal frequency division multiplex (OFDM) systems. In: Proc. IEEE International Conference on Communications ICC '95 Seattle, 'Gateway to Globalization' Bd. 3, 1995, S. 1652-1657 vol.3

[25] [Pollet u. a. 1995] Pollet, T.; Van Bladel, M.; Moeneclaey, M.: BER sensitivity of OFDM systems to carrier frequency offset and Wiener phase noise. In: IEEE Transactions on Communications 43 (1995), Nr. 234, S. 191-193. - ISSN 0090-6778

[26] [Petrovic u. a. 2003a] Petrovic, D.; Rave, W.; Fettweis, G.: Phase Noise Suppression in OFDM including Intercarrier Interference. In: Proceedings of the International OFDM-Workshop, 2003

[27] [Wu und Bar-Ness 2003] Wu, S.; Bar-Ness, Y.: A new phase noise mitigation method in OFDM systems with simultaneous CPE and ICI correction. In: multicarrier spread-spectrum for future wireless systems, 2003

## Patentansprüche

1. Verfahren zur Schätzung und Kompensation von nichtlinearem, multiplikativem Phasenrauschen, bei welchem ein Phasenrauschtrajektor $\hat{\phi}$, welcher eine Schätzung einer Realisierung $\phi$ eines Phasenrauschprozesses abbildet, geschätzt wird, mittels dessen eine Kompensation des Phasenrauschens erfolgt, **dadurch gekennzeichnet , dass** der Phasenrauschtrajektor $\hat{\phi}$ mittels einer unscented-Kalman-Filterung ermittelt wird, wobei die Eingangsgrößen für die unscented-Kalman-Filterung mit einer Beobachtungsgröße *r[n]* und einem Beobachtungsrauschen $\xi r[n]$ zum Zeitpunkt [*n*] ermittelt werden
gemäß

$$r[n] = e^{j\phi[n]} + \underbrace{\frac{\psi[n] - \Delta a[n]e^{j\phi[n]}}{\hat{a}[n]}}_{\xi_{r[n]}} \; ,$$

wobei $\hat{a}[n]$ = *s[n]* * *h[n]* = *a[n]* + $\Delta$*a[n]* ist und wobei *a[n]* einer Faltung des Sendesignals *s[n]* mit dem Übertragungskanal *h[n]* entspricht, $\psi[n]$ eine am Ausgang des Übertragungskanals additiv überlagerte Rauschkomponente $\hat{a}[n]$ ein Schätzwert von *a[n]* und $\Delta$*a[n]* eine Schätzfehler ist und sich die Ausgangsgröße $\hat{\phi}$ der unscented-Kalman-Filterung gemäß $\hat{\phi}[n,n]$ = $\hat{\phi}[n,n$ -1] + *K[n]*(*r[n]* - $\hat{r}[n,n$ - 1]) ergibt, wobei *K* eine Kalman-Verstärkung nach *K[n]* = $P_{\hat{\phi}r,}(P\xi_r[n])^{-1}$, P eine Kovarianz, *r* ein Empfangssignal und $\hat{r}$ eine Wichtung der transformierten Sigmapunkte ist und wobei Werte mit dem Zeitstempel [*n,n*-1] a-priori Information und Werte mit dem Index [*n, n*] a-posteriori Information zum Zeitpunkt [*n*] beinhalten.

## Claims

1. Method for estimating and compensating non-linear, multiplicative phase noise, in the case of which a phase noise trajector $\hat{\phi}$ which maps an estimate of an implementation $\phi$ of a phase noise process is estimated and used to compensate the phase noise, **characterized in that** the phase noise trajector $\hat{\phi}$ is determined by means of unscented Kalman filtering, the input variables being determined for the unscented Kalman filtering with the aid of an observation variable *r[n]* and an observation noise $\xi_r[n]$ at the instant **[n]** in accordance with

$$r[n] = e^{j\phi[n]} + \underbrace{\frac{\psi[n] - \Delta a[n]e^{j\phi[n]}}{\hat{a}[n]}}_{\xi_{r[n]}} \; ,$$

where $\hat{a}[n]$ = *s[n]* * *h[n]* = *a[n]* + $\Delta$*a[n]*, and *a[n]* corresponds to a convolution of the transmit signal *s[n]* with the aid of the transmission channel *h[n]*, $\psi[n]$ is an additively superimposed noise component at the output of the transmission channel, $\hat{a}[n]$ is an estimated value of **a [n]** and $\Delta$*a[n]* is an estimation error, and the output variable $\hat{\phi}$ of the unscented Kalman filtering is yielded in accordance with $\hat{\phi}[n,n]$ = $\hat{\phi}[n,n$ - 1] + *K[n]*(*r[n]* - $\hat{r}[n,n$ - 1]), where *K* is a Kalman amplification according to *K[n]* = $P_{\hat{\phi},r}(P_{\xi_r}[n])^{-1}$, P is a covariance, *r* is a receive signal, and $\hat{r}$ is a weighting of the transformed sigma point, and where values with the time stamp [n, n-1] include a-priori information, and values with the index [n, n] include a-posteriori information at the instant [n].

**Revendications**

1. Procédé d'estimation et de compensation de bruit multiplicatif et non linéaire de phase dans lequel un trajecteur $\hat{\phi}$ de bruit de phase qui représente l'estimation de la réalisation $\phi$ d'un processus de bruit de phase est estimé, une compensation du bruit de phase ayant lieu grâce à lui,
   **caractérisé en ce que**
   le trajecteur $\hat{\phi}$ de bruit de phase est déterminé au moyen d'un filtrage de Kalman dit "inodore", les grandeurs d'entrée du filtrage de Kalman inodore étant déterminées à l'aide d'une grandeur d'observation $r[n]$ et d'un bruit d'observation $\zeta_r[n]$ à l'instant [$n$] selon la relation

$$ r[n] = e^{j\phi[n]} + \underbrace{\frac{\psi[n] - \Delta a[n]e^{j\phi[n]}}{\hat{a}[n]}}_{\xi_{r[n]}} $$

   dans laquelle $\hat{a}[n] = s[n] * h[n] = a[n] + \Delta a[n]$ et $a[n]$ correspond à une convolution du signal d'émission $s[n]$ avec le canal de transfert $h[n]$, $\psi[n]$ étant une composante de bruit superposée par addition à la sortie du canal de transfert, $\hat{a}[n]$ une valeur estimée de $a[n]$ et $\Delta a[n]$ une erreur d'estimation,
   la grandeur de sortie $\hat{\phi}$ du filtrage de Kalman inodore étant donnée par

$$ \phi_{[n]} = \phi_{[n,\ n-1]} + K[n](r[n] - \hat{r}_{[n,\ n-1]}) $$

   dans laquelle $K$ représente une amplification de Kalman selon $K[n] = P_{\hat{\phi},\hat{r}}(P_{\xi_r}[n])^{-1}$,
   $P$ une covariance,
   $r$ un signal de réception
   et $\hat{r}$ une pondération des points sigma transformés,
   les valeurs présentant l'estampille temporelle [$n$, $n-1$] contenant des informations a priori et les valeurs portant l'indice [$n$, $n$] contenant des informations a posteriori à l'instant [$n$].

Figur 1

Figur 2

$$u(t) = u_0 + \Delta u(t)$$

VCO

$f(t)$

Figur 3

EP 2 239 901 B1

Encoder $\xrightarrow{\mathbf{C}}$ $\boxed{\Pi}$ $\xrightarrow{\mathbf{X}}$ M-QAM $\xrightarrow{\mathbf{S}}$ OFDM $\xrightarrow{s[n]}$ $h[n]$ $\oplus$ $\otimes$ $\to y[n]$

$\psi[n]$

$e^{j\phi[n]}$

Figur 4

$y[n]$

| Phasenrausch Schätzung + Kompensation | → | OFDM Demod. | → | $\mathbf{\Pi}^{-1}$ | → | Decoder | → | $\hat{\mathbf{V}}$ → Senke |

$\hat{\mathbf{C}}$

Remodulation

Figur 5

Prozeßrauschen
$\xi_v[n]$

Beobachtungsrauschen
$\xi_r[n]$

Systemgröße

$u[n]$ → **C** → ⊕ → $Z^{-1}$ → $v[n]$ → **D** → ⊕ → $r[n]$ → Kalman → $\hat{v}[n]$

**B**

**B** $\cdots$ Übertragungsmatrix
**C** $\cdots$ Eingabematrix
**D** $\cdots$ Beobachtungsmatrix

Figur 6

$\Delta\phi[n]$

$Z^{-1}$

$\phi[n]$

$e^{j(\cdot)}$

$\xi_r[n]$

$r[n]$

Kalman

$\hat{\phi}[n]$

Figur 7

(a) Vergleich der FER bei $\delta_{3dB} = 0,01$

(b) SNR Verlust bei FER $= 1\%$

Figur 8

EP 2 239 901 B1

Figur 9

**Eingabe** : $r[n]$; $P_{\xi_r}[n] = \text{Var}\,[r[n]]$; $\hat{\phi}[0,0] = 0$; $P_{\hat{\phi}}[0,0] = \text{Var}\,[\Delta\phi]$;

$\alpha^2 = 1 \cdot 10^{-3}, \beta = 2; \lambda = \alpha^2 - 1$;

$W_0^m = \lambda/(1+\lambda)$; $W_0^c = \lambda/(1+\lambda) + (1 - \alpha^2 + \beta)$; $W_{1,2}^m = W_{1,2}^c = 1/(2+2\lambda)$

**Ausgabe** : Phasenrauschschätzung $\hat{\phi}[n,n]$

**für alle** $n = 1, \cdots, N_{code}$ **tue**

 A-priori Information

 $\hat{\phi}[n, n-1] = \hat{\phi}[n-1, n-1]$

 $P_{\hat{\phi}}[n, n-1] = P_{\hat{\phi}}[n-1, n-1] + \text{Var}[\Delta\phi]$

 Unscented Transformation (Berechnung der Sigmapunkte)

 $SP_0[n, n-1] = \hat{\phi}[n, n-1]$

 $SP_{1,2}[n, n-1] = \hat{\phi}[n, n-1] \pm \sqrt{(1+\lambda)P_{\hat{\phi}}[n, n-1]}$

 Nichtlineare Beobachtungsfunktion

 $\nu_i[n, n-1] = \exp(jSP_i[n, n-1])$

 Wichtung der transformierten Sigmapunkte

 $\hat{r}[n, n-1] \approx \sum_i W_i^m \nu_i[n, n-1]$

 Aktualisierung der Kovarianzen

 $P_{\hat{r}} = \sum_i W_i^c (\nu_i[n, n-1] - \hat{r}[n, n-1]) \cdot$

  $(\nu_i[n, n-1] - \hat{r}[n, n-1])^*$

 $P_{\hat{\phi},\hat{r}} = \sum_i W_i^c (SP_i[n, n-1] - \hat{\phi}[n, n-1]) \cdot$

  $(\nu_i[n, n-1] - \hat{r}[n, n-1])^*$

 Kalmanverstärkung

 $K[n] = P_{\hat{\phi},\hat{r}}(P_{\hat{r}} + P_{\xi_r}[n])^{-1}$

 A-posteriori Information

 $\hat{\phi}[n, n] = \hat{\phi}[n, n-1] + K[n](r[n] - \hat{r}[n, n-1])$

 $P_{\hat{\phi}}[n, n] = P_{\hat{\phi}}[n, n-1] - K[n]P_{\hat{\phi},\hat{r}}^*$

Figur 10

# EP 2 239 901 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **GERHARD FETTWEIS.** Common phase error due to phase noise in OFDM - estimation and suppression. *IEEE-PIMRC,* 2004
- **DEMIR, A. ; MEHROTRA, A ; ROYCHOWDHURY, J.** Phase Noise in Oscillators: A Unifying Theory and Numerical Methods for Characterization. *IEEE Transactions on Circuits and System-Part I: Fundamental Theory and Applications,* Mai 2000, vol. 47 (5), 655-674
- **LÖHNING, MICHAEL.** Analyse und Modellierung der Effekte von Abtast-Jitter in Analog-Digital Wandlern. *Dissertation,* 2006
- **DRISCOLL, M.M. ; DONOVAN, J.B.** Vibration-Induced Phase Noise: It Isn't Just About the Oscillator. *Proc. Joint with the 21st European Frequency and Time Forum Frequency Control Symposium IEEE International,* 2007, ISSN 1075-6787, 535-540
- **DEMIR, ALPER.** Analysis and Simulation of Noise in Nonlinear Electronic Circusits and Systems. *Dissertation,* 1997
- **DEMIR, A.** Phase Noise and Timing Jitter in Oscillators With Colored-Noise Sources. *IEEE Transactions on Circuits and Systems-Part I: Fundamental Theory and Applications,* Dezember 2002, vol. 49 (12), 1782-1791
- **BITTNER, S. ; RAVE, W.; ; FETTWEIS, G.** Joint Iterative Transmitter and Receiver Phase Noise Correction using Soft Information. *Proc. IEEE International Conference on Communications ICC '07,* 24. Juni 2007, 2847-2852
- **MUNIER, F. ; ERIKSSON, T. ; SVENSSON, A.** Receiver algorithms for OFDM systems in phase noise and AWGN. *Proc. 15th IEEE International Symposium on Personal, Indoor and Mobile Radio Communications PIMRC 2004,* 2004, vol. 3, 1998-2002
- **WU, SONGPING ; LIU, PAN; ; BAR-NESS, YEHESKEL.** Phase Noise Estimation and Mitigation for OFDM Systems. *IEEE Transactions on Wireless Communications,* 2006, vol. 5 (12), ISSN 1536-1276, 3616-3625
- **PETROVIC, D. ; RAVE, W ; FETTWEIS, G.** Effects of Phase Noise on OFDM Systems With and Without PLL: Characterization and Compensation. *IEEE Transactions on Communications,* 2007, vol. 55 (8), ISSN 0090-6778, 1607-1616

- **EL-TANANY, M.S. ; WU, YIYAN ; HAZY, L.** Analytical modeling and simulation of phase noise interference in OFDM-based digital television terrestrial broadcasting systems. *IEEE Transactions on Broadcasting,* vol. 47 (1), ISSN 0018-9316, 20-31
- **CASAS, R.A. ; BIRACREE, S.L. ; YOUTZ, A.E.** Time domain phase noise correction for OFDM signals. *IEEE Transactions on Broadcasting,* September 2002, vol. 48 (3), 230-236
- **DAUWELS, J. ; LOELIGER, H.-A.** Joint decoding and phase estimation: an exercise in factor graphs. *Proc. IEEE International Symposium on Information Theory,* 2003, 231-231
- **KSCHISCHANG, F. R. ; FREY, B. J. ; LOELIGER, H. A.** Factorgraphs and the sum-product algorithm. *IEEE Transactions on Information Theory,* Februar 2001, vol. 47 (2), 498-519
- **COLAVOLPE, G. ; BARBIERI, A. ; CAIRE, G.** Algorithms for iterative decoding in the presence of strong phase noise. *IEEE Journal on Selected Areas in Communications,* September 2003, vol. 23 (9), 1748-1757
- **BARBIERI, A. ; COLAVOLPE, G ; CAIRE, G.** Joint Iterative Detection and Decoding in the Presence of Phase Noise and Frequency Offset. *IEEE Transactions on Communications,* Januar 2007, vol. 55 (1), 171-179
- **MERLI, F. Z. ; VITETTA, G. M.** A Factor Graph Approach to the Iterative Detection of OFDM Signals in the Presence of Carrier Frequency Offset and Phase Noise. *IEEE Transactions on Wireless Communications,* Marz 2008, vol. 7 (3), 868-877
- **SABBAGHIAN, M. ; FALCONER, D.** Joint Turbo Frequency Domain Equalization and Carrier Synchronization. *IEEE Transactions on Wireless Communications,* Januar 2008, vol. 7 (1), 204-212
- **PETROVIC, D. ; RAVE, W. ; FETTWEIS, G.** Phase Noise Suppression in OFDM using a Kalman Filter. *Proceedings of the International Symposium on Wireless Personal Multimedia Communications,* 2003, vol. 3, 375-379
- **BITTNER, S. ; DENG, E. ; FROTZSCHER, A. ; FETTWEIS, G.** Oscillator Phase Noise Compensation using Kalman Tracking. *Proc. IEEE International Conference on Acoustics, Speech and Signal Processing ICASSP 2009,* April 2009
- Fundamentals of Statistical Processing. **KAY, STEVEN M.** Estimation Theory. Prentice Hall PTR, 1993, vol. I

- **JULIER, S. J. ; UHLMANN, J. K.** Unscented filtering and nonlinear estimation. *Proceedings of the IEEE,* Marz 2004, vol. 92 (3), 401-422
- The unscented Kalman filter for nonlinear estimation. **WAN, E. A. ; VAN DER MERWE, R.** Proc. Adaptive Systems for Signal Processing, Communications AS-SPCC. IEEE, 01. Oktober 2000, 153-158
- **BITTNER, S. ; ZIMMERMANN, E. ; FETTWEIS, G.** Low Complexity Soft Interference Cancellation for MIMO-Systems. *Proc. VTC 2006-Spring Vehicular Technology Conference IEEE 63rd,* 07. Mai 2006, vol. 4, 1993-1997
- **ROBERTSON, P. ; KAISER, S.** Analysis of the effects of phase-noise in orthogonal frequency division multiplex (OFDM) systems. *Proc. IEEE International Conference on Communications ICC '95 Seattle, 'Gateway to Globalization,* 1995, vol. 3, 1652-1657
- **POLLET, T. ; VAN BLADEL, M. ; MOENECLAEY, M.** BER sensitivity of OFDM systems to carrier frequency offset and Wiener phase noise. *IEEE Transactions on Communications,* 1995, vol. 43 (234), ISSN 0090-6778, 191-193
- **PETROVIC, D. ; RAVE, W. ; FETTWEIS, G.** Phase Noise Suppression in OFDM including Intercarrier Interference. *Proceedings of the International OFDM-Workshop,* 2003
- **WU, S. ; BAR-NESS, Y.** A new phase noise mitigation method in OFDM systems with simultaneous CPE and ICI correction. *multicarrier spread-spectrum for future wireless systems,* 2003